# EUROPEAN PATENT SPECIFICATION

(11) **EP 0 557 102 B1**
(45) Date of publication and mention of the grant of the patent: **12.07.1995**
(21) Application number: 93301206.4
(22) Date of filing: 18.02.1993
(51) Int. Cl.: B60C 15/024

(54) **Pneumatic tyre**
Luftreifen
Bandage pneumatique

(30) Priority: 21.02.1992 JP 72615/92
(43) Date of publication of application: 25.08.1993
(73) Proprietor: SUMITOMO RUBBER INDUSTRIES LIMITED, Kobe-shi Hyogo-ken (JP)
(72) Inventor: Yoshida, Masanao, Akashi-shi, Hyogo-ken (JP); Uemura, Yoshiaki, Kobe-shi, Hyogo-ken (JP)
(74) Representative: Stewart, Charles Geoffrey

(56) References cited:
- EP-A- 0 129 675
- DE-A- 3 616 199
- PATENT ABSTRACTS OF JAPAN vol. 7, no. 79 (M-204)(1224) 31 March 1983&/ JP-A-58 004 607 (BRIDGESTONE TIRE K.K.) 1 November 1983

## Description

The present invention relates to a pneumatic tyre, more particularly a tubeless radial tyre for passenger cars whose nominal tyre width in the tyre size designation is in the range of 135 to 275 millimetre.

In general, tubeless radial tyres to be mounted on tapered rims are widely used for passenger cars.

It is well known that the contact between the tyre and rim is a very important factor with respect to the airtightness therebetween.

However, the actual contacting state of the bead portions of a tyre with the flange and bead-seat of the rim was not known until the advent of the X-ray CT scanner.

On the other hand, slip between a tyre and rim in the circumferential direction of the tyre has often been observed when a passenger car made a quick start, a sudden stop or the like. Such slip has been more common with recent increases in engine power and higher speed running.

In order to avoid such slip, the profile of the bead portions of a tyre has been designed such that the profile of the regular rim for the tyre is partially overlapped by the bead profile of the unmounted tyre, and the overlapped part is arranged to be in that portion corresponding to the radially outer edge portion of the rim flange. Accordingly, the contact pressure is increased in the overlapped part.

By this method, slip was prevented, and the airtightness was not lost. However, RRO (Radial Runout) and FV (Force Variation) increased.

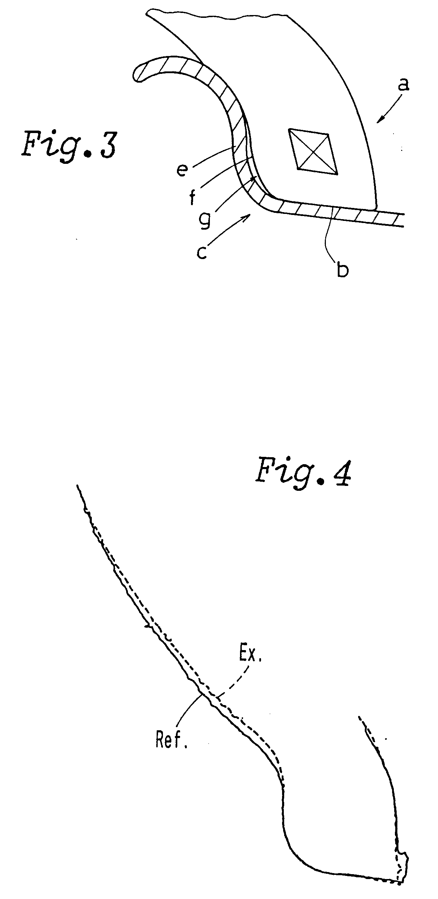

Therefore, using an X-ray CT scanner to check the tyre-to-rim fit, the inventors made a study of the effect of fit on RRO and FV, and as a result, as shown in Fig.3, it was discovered that although the bead bottom face (b) contacts the rim (c) airtightly, a gap (g) was formed between the side face (f) of the bead portion (a) and the axially inner surface of the rim flange (e), and as a result, the tyre was disturbed in its position and profile resulting in increased RRO and FV.

A tyre according to the preamble of claim 1 is known from DE-A-3 616 199.

It is therefore, an object of the present invention to provide a pneumatic tyre, in which the contact of the bead portions with its regular rim is improved.

According to one aspect of the invention, a pneumatic tyre comprises a pair of axially spaced bead portions each having a defined bead profile, a tread portion with axial edges, and a pair of sidewall portions extending from the tread edges to the bead portions, characterised in that in a cross section including the tyre axis, the bead profile of each bead portion is made of a curved line in the range of a locus of

$\text{y = f(x) + 1}$

and a locus of

$\text{y = f(x) - 1}$

when x-value is varied from -15.29 to 0.523 (mm),
wherein

$\text{f(x) = 3.789 + 2.4273x + 0.73024x² + 0.12736x³ + 0.012774x⁴ + 6.659X10⁻⁴x⁵ + 1.36X10⁻⁵x⁶}$

x being the relative radial distance in millimetres measured from a reference point which is the origin of the x-axis and the y-axis of coordinates and is set at the bead-heel-point, where the direction of increase of the x-value is radially inwards of the tyre, and y is the relative axial distance in millimetres based on said reference point, where the direction of increase of the y-value is axially inwards of the tyre.

Accordingly, the bead profile comprises a middle part (C-D) comprising a substantially straight line parallel to the radial direction of the tyre, an upper part (A-C) comprising a concavely curved line extending radially outwardly and axially outwardly from the radially outer edge of the middle part, a heel part (D-E) comprising a convexly curved line extending radially inwardly and axially inwardly from the radially inner edge of the middle part, and a bottom part (B-E) comprising a substantially straight line extending axially inwardly from the radially inner edge of the heel part with an inclination angle of substantially five degrees to the tyre axial direction.

The above-mentioned reference point, the bead-heel-point, is the intersecting point between the straight bead bottom line which is inclined at five degrees to the tyre axial direction and the straight bead side line which is parallel to the tyre radial direction.

An embodiment of the present invention will now be described in detail in conjunction with the accompanying drawings in which:
Fig.1 is a cross sectional view of a tyre of the present invention showing the tyre mounted on its regular rim;
Fig.2 is an enlarged schematic cross sectional view of the bead portion explaining the bead profile;
Fig.3 is a schematic cross sectional view showing the problem of a gap between the tyre bead and rim; and
Fig.4 is a cross sectional view showing the bead profile according to the present invention and for comparison the conventional bead profile.

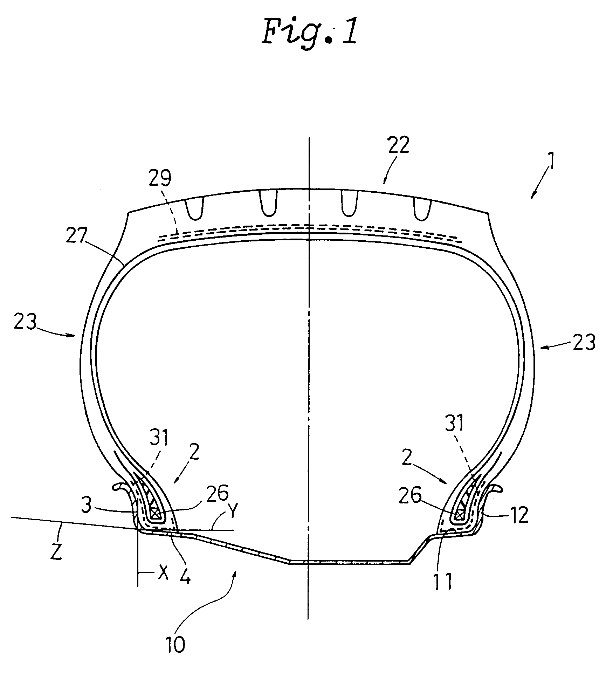

In Fig.1, a pneumatic tyre 1 of the invention is a passenger tyre of 205/65R15 in metric size. The tyre 1 is mounted on its regular rim 10 of size 6 1/2JJx15 and inflated to its regular inner pressure. Here, the regular rim is the rim officially approved for the tyre by, for example JATMA (Japan), TRA (USA), ETRTO (Europe) and the like.

The tyre 1 comprises a tread portion 22, a pair of axially spaced bead portions 2 with a bead core 26 in each, a pair of sidewall portions 23 extending radially inwardly from the tread edges to the bead portions, a toroidal carcass 27 extending between the bead portions 2, and a belt 29 disposed radially outside the carcass and the tread portion 22.

The carcass 27 comprises at least one ply of cords arranged radially at 60 to 90 degrees with respect to the tyre equator C extending between the bead portions 2 and turned up around the bead cores to give a radial or so called semiradial structure.

For the carcass cords, organic fibre cords, e.g. nylon, polyester, rayon, aromatic polyamide or the like are used.

The belt 29 comprises a plurality of plies of cords inclined so that the cords of one ply cross the cords of the next ply.

For the belt cords, steel cords and organic fibre cords, e.g. nylon, polyester, rayon, aromatic polyamide or the like can be used.

In this embodiment, to increase the bead rigidity, the bead portion 2 is provided with a reinforcing layer 31 wrapped around the carcass 27. The reinforcing layer 31 comprises reinforcement cords laid crosswise to the carcass cords. For the reinforcing cords, steel cords, strong organic fibre cords, e.g. aromatic polyamide fibre cords, or the like may be used.

Incidentally, the regular or approved rim for a tubeless radial tyre for passenger cars whose nominal tyre width in the tyre size designation is in the range of 135 to 275 millimetre and may be a dropped centre rim, which comprises a central well for tyre mounting, a pair of axially spaced bead seats for the bead portions 2, each located on each side of the central well, and a pair of flanges each extending radially outwardly from the axially outer edge of each bead seat. The bead seats are tapered at five degrees toward the centre.

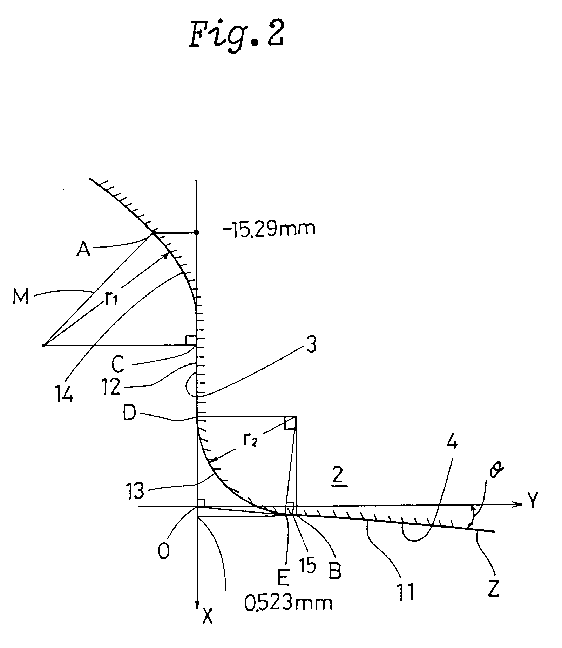

Each of the bead portions 2 is provided with a bead profile as shown in Fig.2.

The bead profile comprises an upper part 14 extending from a point A to a point C, a middle part 12 extending from the point C to a point D, a heel part 13 extending from the point D to a point E, a bottom part 15 extending from the point E to a point B, and an extended part 11 extending from the point B to the bead toe.

The bead profile at points between the point A and the point B is defined by the locus of the specific equation (1) (see below). As a result, in the cross section including the tyre axis, the middle part 12 is made of a substantially straight line being parallel to the radial direction of the tyre; the upper part 14 is made of a concavely curved line extending radially outwardly and axially outwardly from the radially outer edge of the middle part 12; the heel part 13 is made of a convexly curved line extending radially inwardly and axially inwardly from the radially inner edge of the middle part 12; and the bottom part 15 is made of a substantially straight line extending axially inwardly from the radially inner edge of the heel part with an inclination angle of five degrees to the tyre axial direction.

The upper part 14 is an arc having a radius of curvature (r1) of 9.25 mm, and the heel part 13 is an arc having a radius of curvature (r2) of 6.0 mm.

The extended part 11 is made of a straight line extending from the point B at five degrees, the same inclination angle as the bottom part.

The above-mentioned equation (1) is

$\text{y = f(x) Eq.(1)}$

wherein

$\text{f(x) = 3.789 + 2.4273x + 0.73024x² + 0.12736x³ + 0.012774x⁴ + 6.659X10⁻⁴x⁵ + 1.36X10⁻⁵x⁶}$

where x is a variable defining the relative radial distance in millimetres based on the bead-heel-point O as a reference point, where the direction of increase of the x-value is that radially inwards of the tyre, and x is varied from -15.29 to 0.523, and y is the resultant variable defining the relative axial distance in millimetres based on the above-mentioned reference point, where the direction of increase of the y-value is that axially inwards of the tyre. The bead-heel-point is the intersecting point between the straight bead bottom line inclined at five degrees to the tyre axial direction and the straight bead side line parallel to the tyre radial direction.

The x-value is varied from -15.29 to 0.523 in the equation (1) because the x-values for the point A and point B are set at -15.29 and 0.523, respectively.

Incidentally, the x-values for the above-mentioned point C, point D and point E are -8.75, -5.5, and 0.477, respectively.

As explained above, the equation (1) is based on the bead-heel-point, for convenience, because the bead-heel-point is a well known reference point for determining the rim diameter.

If the reference point is set at a different point, the equation (1) should be modified.

For example, if the reference point is set at plus (dy) millimetre axially inward of the bead-heel-point, (y) is replaced by (y+dy).

Further, if the reference point is set at plus (dx) millimetre radially inward of the bead-heel-point, (x) is replaced by (x+dx) as shown as equation (2),

$\text{y+dy = f(x+dx) Eq.(2)}$

and the above-mentioned range of from -15.29 to 0.523 is changed to as being from (-15.29 - dx) to (0.523 - dx).

Accordingly,

$\text{(y+dy) = 3.789 + 2.4273(x+dx) + 0.73024(x+dx)² + 0.12736(x+dx)³ + 0.012774(x+dx)⁴ + 6.659X10⁻⁴(x+dx)⁵ + 1.36X10⁻⁵(x+dx)⁶}$

An example tyre of size 205/65R15 having a bead profile defined by the equation (1) was experimentally made. A reference tyre having a bead profile according to the prior art was also prepared. Those bead profiles are shown in Fig.4. The test tyres had an identical structure with the exception of the bead profiles.

The test tyre was mounted on a regular rim of 6 1/2JJX15 and inflated to the normal pressure in JATMA's standard. Then, using an X-ray CT scanner, the bead portion was inspected for any gap between the bead and the rim. The results are as follows:

| | Ex. | Ref. |
|---|---|---|
| Circumferential position | gap (mm) | gap (mm) |
| 1 | 0 | 0.50 |
| 2 | 0 | 0.42 |
| 3 | 0 | 0.56 |
| 4 | 0 | 0.28 |
| Average | 0 | 0.44 |

From the tests, it was confirmed that the bead portion having the bead profile according to the equation (1) fits the regular rim without any gap, which was also confirmed in a combination of a tyre of another size and its regular rim.

It was further confirmed that no gap is formed when the y-value has a small variation. Such a variation is plus/minus one millimetre, more preferably plus/minus 0.5 millimetre.

Therefore, including the allowable variation, the above-mentioned equation (1) is modified as follows:

$\text{y = f(x) + Variation Eq.(3)}$

Similarly, the equation (2) is modified as follows:

$\text{y+dy = f(x+dx) + Variation Eq.(4)}$

Here, the Variation is plus/minus one (± 1, that is, from -1 to 1), more preferably ± 0.5.

As explained as above, by satisfying the former equations (1) or (2) by the bead profile, the tyre bead portion will fit on the rim flange's inner surface without any gap therebetween.

Further, by satisfying the later equations (3) or (4) by the bead profile, the applicability of the invention is further extended from the JATMA standard to another standard such as of TRA (USA), ETRTO (Europe) and the like. In any way, the present invention is applied to a tubeless radial tyre for passenger cars whose nominal tyre width in the tyre size designation is in the range of 135 to 275 millimetre.

## Claims

1. A pneumatic tyre comprising a pair of axially spaced bead portions (2) each having a defined bead profile, a tread portion (22) with axial edges, and a pair of sidewall portions (23) extending from the tread edges to the bead portions (2), characterised in that in a cross section including the tyre axis, the bead profile of each bead portion (2) is a curved line in the range of a locus of
$\text{y = f(x) + 1}$
and a locus of
$\text{y = f(x) - 1}$
when x-value is varied from -15.29 to 0.523,
wherein
$\text{f(x) = 3.789 + 2.4273x + 0.73024x² + 0.12736x³ + 0.012774x⁴ + 6.659X10⁻⁴x⁵ + 1.36X10⁻⁵x⁶}$
x being the relative radial distance in millimetres measured from a reference point which is the origin of the x-axis and the y-axis of coordinates and is set at the bead-heel-point (O), where the direction of increase of the x-value is radially inwards of the tyre, and y is the relative axial distance in millimetres based on said reference point (O), where the direction of increase of the y-value is axially inwards of the tyre.

2. A pneumatic tyre according to claim 1, characterised in that said bead profile is in a range between a locus of
$\text{y = f(x) + 0.5}$
and a locus of
$\text{y = f(x) - 0.5}$
when x is varied from -15.29 to 0.523.

3. A pneumatic tyre according to claim 1, characterised in that said bead profile is substantially the same as a locus of
$\text{y = f(x)}$
when x is varied from -15.29 to 0.523.

4. A pneumatic tyre according to claim 1, 2 or 3, characterised in that said bead profile comprises a middle part (12) made of a substantially straight line parallel to the radial direction of the tyre, an upper part (14) made of a concavely curved line extending radially outwardly and axially outwardly from the radially outer edge (C) of the middle part (12), a heel part (13) made of a convexly curved line extending radially inwardly and axially inwardly from the radially inner edge (D) of the middle part (12), and a bottom part (15) made of a substantially straight line extending axially inwardly from the radially inner edge (E) of the heel part (13) with an inclination angle of five degrees to the tyre axial direction, and each said bead portion has a bottom surface (11) made of a straight line extending from the axially inner edge (B) of said bottom part (15) to the toe of the bead at the same inclination angle as the bottom part.

## Patentansprüche

1. Ein Luftreifen mit einem Paar axial beabstandeter Wulstteile (2), von denen jedes ein definiertes Wulstprofil aufweist, einem Laufflächenteil (22) mit axialen Rändern, und einem Paar von Seitenwandteilen (23), die sich von den Laufflächenrändern zu den Wulstteilen (2) erstrecken,
dadurch gekennzeichnet,
daß in einem Querschnitt, der die Reifenachse einschließt, das Wulstprofil jedes Wulstteils (2) eine gekrümmte Linie in dem Bereich einer Ortskurve von
$\text{y= f(x) + 1}$
und einer Ortskurve von
$\text{y = f(x) - 1}$
ist,
wenn der x-Wert von -15,29 zu 0,523 variiert wird, worin
$\text{f(x) = 3,789 + 2,4273x + 0,73024x² + 0,12736x³ + 0,012774x⁴ + 6,659X10⁻⁴x⁵ + 1,36X10⁻⁵x⁶,}$
wobei x der relative radiale Abstand in Millimetern gemessen von einem Referenzpunkt ist, welcher der Ursprung der x-Achse und der y-Achse der Koordinaten ist und auf den Wulstfersenpunkt (O) gesetzt ist, wobei die Richtung des Anstiegs des x-Wertes radial einwärts des Reifens liegt und y der relative axiale Abstand in Millimetern basierend auf dem Referenzpunkt (O) ist, wobei die Richtung des Anstiegs des y-Wertes axial einwärts des Reifens liegt.

2. Ein Luftreifen nach Anspruch 1,
dadurch gekennzeichnet,
daß das Wulstprofil in einem Bereich zwischen einer Ortskurve von
$\text{y = f(x) + 0,5}$
und einer Ortskurve von
$\text{y = f(x) - 0,5}$
liegt, wenn x von -15,29 bis 0,523 variiert wird.

3. Ein Luftreifen nach Anspruch 1,
dadurch gekennzeichnet,
daß das Wulstprofil im wesentlichen das gleiche wie eine Ortskurve von
$\text{y = f(x)}$
ist,
wenn x von -15,29 bis 0,523 variiert wird.

4. Ein Luftreifen nach Anspruch 1, 2 oder 3,
dadurch gekennzeichnet,
daß das Wulstprofil einen Mittelteil (12) umfaßt, der aus einer im wesentlichen geraden Linie parallel zu der radialen Richtung des Reifens gebildet ist, einen oberen Teil (14), der aus einer konkav gekrümmten Linie gebildet ist, die sich radial auswärts und axial auswärts von dem radial äußeren Rand (C) des Mittelteiles (12) erstreckt, einen Fersenteil (13), der aus einer konvex gekrümmten Linie gebildet ist, die sich radial einwärts und axial einwärts von dem radial inneren Rand (D) des Mittelteiles (12) erstreckt, und einen Bodenteil (15), der aus einer im wesentlichen geraden Linie gebildet ist, die sich axial einwärts von dem radial inneren Rand (E) des Fersenteils (13) mit einem Neigungswinkel von 5° zu der axialen Richtung des Reifens erstreckt, und jeder Wulstteil eine Bodenoberfläche (11) aufweist, die aus einer geraden Linie gebildet ist, die sich von dem axial inneren Rand (B) des Bodenteiles (15) zum Zeh des Wulstes mit dem selben Neigungswinkel wie der Bodenteil erstreckt.

## Revendications

1. Pneumatique comprenant deux parties (2) de talon qui sont espacées axialement et ont chacune un profil déterminé de talon, une partie (22) de bande de roulement ayant des bords axiaux, et une paire de parties (23) de flancs placées des bords de la bande de roulement aux parties de talon (2), caractérisé en ce que, dans une coupe contenant l'axe du pneumatique, le profil de talon de chaque partie (2) de talon est une courbe comprise entre le lieu
$\text{y = f(x) + 1}$
et le lieu
$\text{y = f(x) - 1}$
lorsque la valeur x varie entre -15,29 et 0,523, avec
$\text{f(x) = 3,789 + 2,4273x + 0,73024x² + 0,12736x³ + 0,012774x⁴ + 6,659.10⁻⁴x⁵ + 1,36.10⁻⁵x⁶}$
x est la distance radiale relative en millimètres mesurée à partir d'un point de référence qui est l'origine de l'axe x et de l'axe y de coordonnées et qui est réglé au point de pointe de talon (O), le sens d'augmentation de la valeur x étant tourné radialement vers l'intérieur du pneumatique, et y est la distance relative axiale en millimètres par rapport au point de référence (O), le sens d'augmentation de la valeur y étant dirigé radialement vers l'intérieur du pneumatique.

2. Pneumatique selon la revendication 1, caractérisé en ce que le profil de talon est dans une plage comprise entre le lieu
$\text{y = f(x) + 0,5}$
et le lieu
$\text{y = f(x) - 0,5}$
x variant entre -15,29 et 0,523.

3. Pneumatique selon la revendication 1, caractérisé en ce que le profil de talon est pratiquement le lieu de
$\text{y = f(x)}$
x variant de -15,29 à 0,523.

4. Pneumatique selon la revendication 1, 2 ou 3, caractérisé en ce que le profil de talon comporte une partie médiane (12) formée pratiquement d'une droite parallèle à la direction radiale du pneumatique, et une partie supérieure (14) formée d'une courbe concave disposée radialement vers l'extérieur et axialement vers l'extérieur du bord radialement externe (C) de la partie médiane (12), une partie (13) de pointe formée d'une courbe convexe disposée radialement vers l'intérieur et axialement vers l'intérieur du bord radialement interne (D) de la partie médiane (12), et une partie inférieure (15) formée pratiquement d'une droite disposée axialement vers l'intérieur depuis le bord radialement interne (E) de la partie de pointe (13) avec une inclinaison de 5° par rapport à la direction axiale du pneumatique, et chaque partie de talon a une surface inférieure (11) formée par une droite partant du bord axialement interne (B) de la partie inférieure (15) vers le bout du talon avec la même inclinaison que la partie inférieure.
